# EUROPÄISCHE PATENTANMELDUNG

(11) **EP 0 916 242 A2**
(43) Veröffentlichungstag der Anmeldung: **19.05.1999**
(21) Anmeldenummer: 98120541.2
(22) Anmeldetag: 30.10.1998
(51) Int. Cl.: A01B 33/02

(54) **Bodenbearbeitungsmaschine**

(30) Priorität: 05.11.1997 DE 19748869; 12.08.1998 DE 19836486
(71) Anmelder: NIEMEYER Landmaschinen GmbH, D-48477 Hörstel-Riesenbeck (DE)
(72) Erfinder: Ungruh, Josef, 48429 Rheine (DE)

(57) **Zusammenfassung**

Bodenbearbeitungsmaschine mit einem Tragwerk zur Ankopplung an den Dreipunkt-Kraftheber eines Traktors (2), mit einem portalartig ausgebildeten Maschinenrahmen, dessen Seitenteile (18) durch einen Querträger (17) miteinander verbunden sind, mit einem angetriebenen horizontal und quer zur Fahrtrichtung sich erstreckenden Rotationskörper, welcher in den Seitenteilen (18) gelagert und mit Bodenbearbeitungswerkzeugen besetzt ist und dessen Rotationskörper von der Zapfwelle eines Traktors (2) antreibbar ist, wobei der Rotationskörper mit auf diesem dreh- und antreibbar gelagerten Bodenbearbeitungswerkzeugen besetzt ist.

## Beschreibung

Die Erfindung betrifft eine Bodenbearbeitungsmaschine nach dem Oberbegriff des Anspruchs 1.

Für die angetriebene Bodenbearbeitung sind beispielsweise Kreiseleggen, Zinkenrotoren und Beetfräsen bekannt. Während die Arbeitswerkzeuge eines Zinkenrotors und die einer Beetfräse ausschließlich Rotationsbewegungen um eine horizontal und quer zur Fahrtrichtung ausgerichtete Rotationsachse ausführen, führen die Arbeitswerkzeuge einer Kreiselegge ausschließlich Drehbewegungen um vertikal ausgerichtete Rotationsachsen aus. Allein schon bedingt durch diese unterschiedlichen Konstruktionsmerkmale ergeben sich verfahrenstechnische Unterschiede hinsichtlich der Durchmischung der Bodenkrume zur Aufbereitung des Saatbeetes oder zum Umbruch von Grünflächen. Aus diesem Grunde sind diese unterschiedlichen Geräte schwerpunktmäßig auch primär für verschiedene Einsatzbedingungen vorgesehen, wenngleich sie sich, was ihre Anwendbarkeit in der Bodenbearbeitung anbetrifft, teilweise überdecken.

Aufgabe der Erfindung ist es, eine angetriebene Bodenbearbeitungsmaschine zu schaffen, die verschiedenen verfahrenstechnischen Eigenschaften, die einer Kreiselegge, die eines Zinkenrotors und die einer Beetfräse in sich vereinigt, welche nachfolgend als Kreiselrotoregge bezeichnet ist. Gelöst wird diese Aufgabe mit den Merkmalen im kennzeichnenden Teils des Anspruchs 1. Die weitere Ausgestaltung der Erfindung ist der nachfolgenden Beschreibung, den Zeichnungen und den Ansprüchen 2 bis 11 zu entnehmen. Gegenstand der Erfindung ist ein angetriebener Rotationskörper mit angetriebenen rotierenden Bodenbearbeitungswerkzeugen als Teil einer Bodenbearbeitungsmaschine. Der Rotationskörper besteht im wesentlichen aus einer Rotorwelle, ausgebildet als Hohlprofil, wobei die Rotorwelle in ihrer Längserstreckung und auf ihrem Umfang mit mehreren rotierenden Arbeitswerkzeugen besetzt ist. Die rotierenden Arbeitswerkzeuge sind vorzugsweise ausgebildet als Zinkenkreisel, wie sie beispielsweise von Kreiseleggen bekannt sind. Gelagert ist der Rotationskörper, nachfolgend als Kreiselrotor bezeichnet, in einem portalartig ausgebildeten Maschinenrahmen, der mit einem Tragwerk zur Ankopplung an den Dreipunkt-Kraftheber eines Traktors ausgestattet ist. Angetrieben wird der Kreiselrotor von einem Antriebsstrang, bestehend aus Zapfwellen und Getrieben, wobei dieser Antriebsstrang mit der Zapfwelle eines Traktors in Antriebsverbindung steht.

Die Rotationsachse der Rotorwelle des Kreiselrotors und die Rotationsachsen der Zinkenkreisel stehen jeweils etwa lotrecht zueinander, so daß die Rotationsachse eines Zinkenkreisels in Bezug auf die Rotationsachse der Rotorwelle eine radiale Ausrichtung einnimmt. Vorzugsweise ist ein Zinkenkreisel mit zwei Bodenbearbeitungszinken ausgestattet.

Der Antrieb der Zinkenkreisel ist direkt gekoppelt mit dem Antrieb der Rotorwelle, indem die Drehbewegung der Rotorwelle gleichzeitig die Drehbewegung der Zinkenkreisel erzeugt. Diese wird erzeugt durch einen Kegelradtrieb, der sich im Innenraum der Rotorwelle befindet. Das drehfest mit der Antriebswelle eines Zinkenkreisels verbundene Kegelrad steht mit einem feststehenden Kegelrad, dessen Figurenachse mit der Rotationsachse des Kreiselrotors identisch ist, in Eingriff, so daß sich das Kegelrad der Antriebswelle eines Zinkenkreisels an dem feststehenden Kegelrad abwälzt und dem Zinkenkreisel somit seine Drehbewegung aufzwingt.

Diese Ausführungsform angetriebener Zinkenkreisel bewirkt, daß die Arbeitswerkzeuge der Zinkenkreisel in ihrem Betriebszustand gleichzeitig drei Bewegungsformen als Bewegungsgrößen erfahren. Es handelt sich hierbei um zwei Drehbewegungen als Folge der Rotationsbewegungen, zum einen um die Zinkenkreiselsachse und zum anderen um die Rotationsachse der Rotorwelle, und um die translatorische Bewegung als Folge der Fahrbewegung des die Kreiselrotoregge antreibenden Traktors.

Ein Kreiselrotor besitzt mehrere rotierende Zinkenkreisel, wobei diese auf dem Umfang und in Längsrichtung der Rotorwelle verteilt angeordnet sind. Durch diese Anordnung von mehreren rotierenden Zinkenkreiseln auf dem Kreiselrotor wird somit eine Bodenbearbeitungsmaschine mit angetriebenen, zweifach rotierenden Bodenbearbeitungswerkzeugen geschaffen.

Der besondere Vorteil der Kreiselrotoregge besteht in der besonders intensiven Bodenbearbeitung durch gleichzeitige Höhen-, Quer- und Längsdurchmischung des Bodens einschließlich der Zerkleinerung und Einarbeitung von organischer Masse, wie beispielsweise Pflanzenreste.

Weitere Merkmale und Vorteile der Erfindung ergeben sich aus der nachfolgenden Beschreibung und den Zeichnungen, in denen ein Ausführungsbeispiel einer Kreiselrotoregge gemäß der Erfindung schematisch, angenähert maßstäblich dargestellt ist.

### Bezugszeichenliste

- 1 -: Kreiselrotoreggen-Kombination
- 2 -: Traktor
- 3 -: Heck-Dreipunktgestänge
- 4 -: Kreiselrotoregge
- 5 -: Packerwalze
- 6 -: Tragbock
- 7 -: Profilkeilwelle
- 8 -: Winkelgetriebe
- 9 -: Gelenkwelle
- 10 -: Untersetzungsgetriebe
- 11 -: Rollenkettengetriebe
- 12 -: Durchtriebslager
- 13 -: Endlager
- 14 -: Rotorwelle
- 15,15' -: Zinkenkreisel
- 16 -: Bodenbearbeitungszinken
- 17 -: Querträger
- 18 -: Seitenteile
- 19 -: Sechskantachse
- 20 -: Hohlprofil
- 21 -: Vielkeilprofil
- 22 -: Kegelradritzel
- 23,23' -: Tellerrad
- 24 -: Wälzlager
- 25 -: Zinkenkreisellagergehäuse
- 26 -: Kreiselachsenflansch
- 27,27' -: Zinkenkreiselachse
- 28 -: Rotorwellenachse
- 29 -: Schnittpunkt
- 30 -: Antriebszapfen
- 31 -: Flanschverbindung
- 32 -: Flanschbund
- 33 -: Spannhülse
- 34 -: Kreiselrotor
- 35 -: Wälzlager
- 36 -: Flanschlagergehäuse
- F -: Fahrtrichtung
- M_{P} -: Massenpunkt
- V₁ -: Rotationsbewegung
- V₂ -: Rotationsbewegung
- V₃ -: Translationsbewegung

### Es zeigen:

- Fig. 1 -: Kreiselrotoreggen-Kombination in Draufsicht in Fahrtrichtung (F)
- Fig. 2 -: Kreiselrotoreggen-Kombination in Blickrichtung entgegen der Fahrtrichtung (F)
- Fig. 3 -: Kreiselrotoreggen-Kombination in Seitenansicht gemäß Ansicht (A) der Fig. 2
- Fig. 4 -: Draufsicht der Kreiselrotoreggen-Kombination
- Fig. 5 -: Vergrößerter Ausschnitt der Rotorwelle gemäß Einzelheit (X) der Fig. 2
- Fig. 6 -: Schnitt B-B gemäß Fig. 5 in vergrößerter Darstellung
- Fig. 7 -: Schnitt C-C gemäß Fig. 5 in vergrößerter Darstellung
- Fig. 8 -: Einzelheit (Y) als Längsschnitt gemäß Fig. 2 in vergrößerter Darstellung
- Fig. 9 -: Kreiselrotor mit beidseitigen Lagerungen
- Fig. 10 -: Ansicht D gemäß Fig. 8

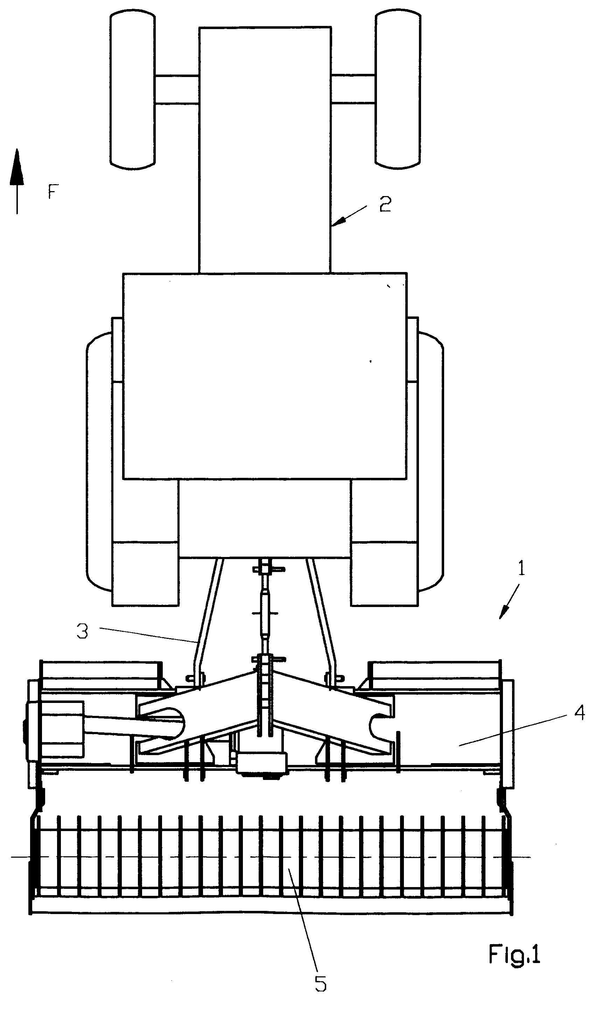

Fig. 1 zeigt eine Kreiselrotoreggen-Kombination (1) in Draufsicht in Fahrtrichtung (F) ausgeführt als Kreiselrotoregge (4) mit einer Packerwalze (5), angebaut an das Heck-Dreipunktgestänge (3) des Traktors (2) in Fahrtrichtung (F).

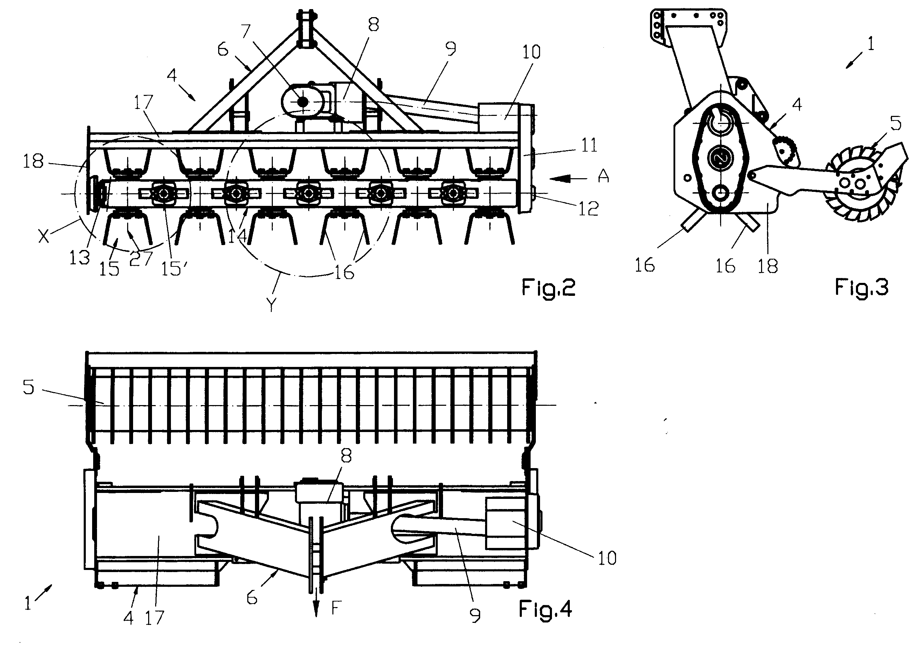

Fig. 2 zeigt eine Kreiselrotoreggen-Kombination (1) in Blickrichtung entgegen der Fahrtrichtung (F), bestehend aus dem Tragbock (6), dem Querträger (17), an den der Tragbock (6) angeschraubt ist, den Seitenteilen (18), die an den Querträgern (17) geschraubt sind, dem Winkelgetriebe (8) und der Profilkeilwelle (7) für den Zapfwellenanschluß der Gelenkwelle, welche den Traktor (2) mit der Kreiselrotoregge (4) antriebsseitig verbindet, einer Gelenkwelle (9), die Verbindung zwischen dem Winkelgetriebe (8) und dem Untersetzungsgetriebe (10) herstellt, einem weiteren Rollenkettengetriebe (11), dem Durchtriebslager (12) und dem Endlager (13), der Rotorwelle (14), den Zinkenkreiseln (15), die paarweise auf der Rotorwelle (14) sich diametral gegenüberliegen und einander entgegengesetzte Drehbewegungen ausführen, wobei jeweils zwei benachbarte Kreiselpaare auf der Rotorwelle um ihre rotierenden Kreiselachsen ebenfalls entgegengesetzt gerichtete Drehbewegungen ausführen, wobei jeweils zwei Bodenbearbeitungszinken (16) innerhalb eines Zinkenkreisels (15) einen kompletten Zinkenkreisel darstellen.

Fig. 3 zeigt die Kreiselrotoreggen-Kombination (1) in Seitenansicht gemäß Ansicht (A) der Fig. 2, bestehend aus den Seitenteilen (18), den teilweise sichtbaren Bodenbearbeitungszinken (16) und der Packerwalze (5).

Fig. 4 zeigt die Draufsicht der Kreiselrotoreggen-Kombination (4) mit seinem Querträger (17), dem Tragbock (6) zum Anschluß der Kreiselrotoregge (4) an das Dreipunktgestänge des Traktors (2), dem Winkelgetriebe (8), dem Untersetzungsgetriebe (10), der Gelenkwelle (9) und der Packerwalze (5).

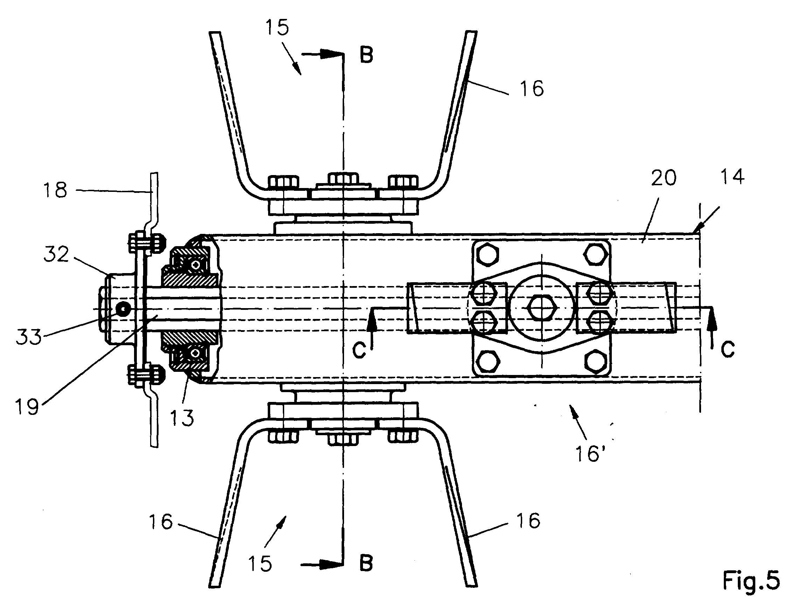

Fig. 5 zeigt einen vergrößerten Ausschnitt der Rotorwelle (14) gemäß Einzelheit (X) der Fig. 2, wobei die Rotorwelle (14) als Hohlprofil (20) ausgebildet ist und diese sich mit ihrem Endlager (13) als Wälzlager mit seinem feststehenden Innenring auf der feststehenden Sechskantachse (19) abstützt. Die Sechskantachse (19) stützt sich in dem Flanschbund (32) ab, wobei der Flanschbund (32) mit dem Seitenteil (18) verschraubt ist und die Sechskantachse (19) gegen axiale Verrückung mit der Spannhülse (33) mit dem Flanschbund (32) verstiftet ist.

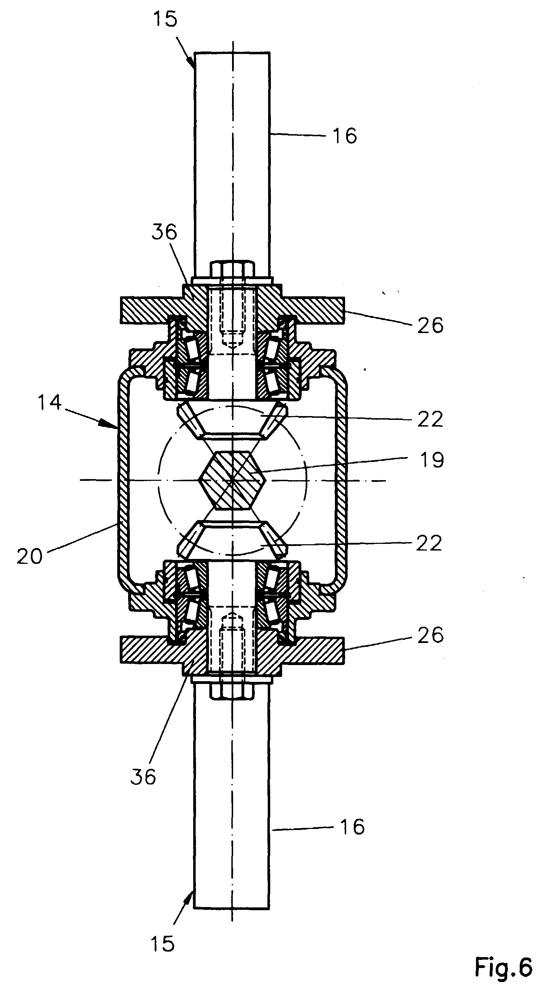

Fig. 6 zeigt den Schnitt B-B in vergrößerter Darstellung gemäß Fig. 5. Diese Darstellung zeigt die Lagerung eines Zinkenkreiselpaares bestehend aus zwei diametral gegenüberliegenden Zinkenkreisel (15). Ein Zinkenkreisel (15) besteht aus je zwei Bodenbearbeitungszinken (16), die jeweils mit ihrem Kreiselachsenflansch (26) verschraubt sind und einem Kegelradritzel (22). Der Kreiselachsenflansch (26) ist drehfest mittels einer Vielkeilprofilverbindung mit dem Kegelradritzel (22) verbunden. Die Zinkenkreisel (15) sind jeweils in einem Flanschlagergehäuse (36) in Wälzlagern (24), ausgeführt als Kegelrollenlager, gelagert. Die Flanschlagergehäuse (36) der diametral gegenüberliegenden Zinkenkreisel (15) sind jeweils mit der Wandung des Hohlprofils (20) verschraubt.

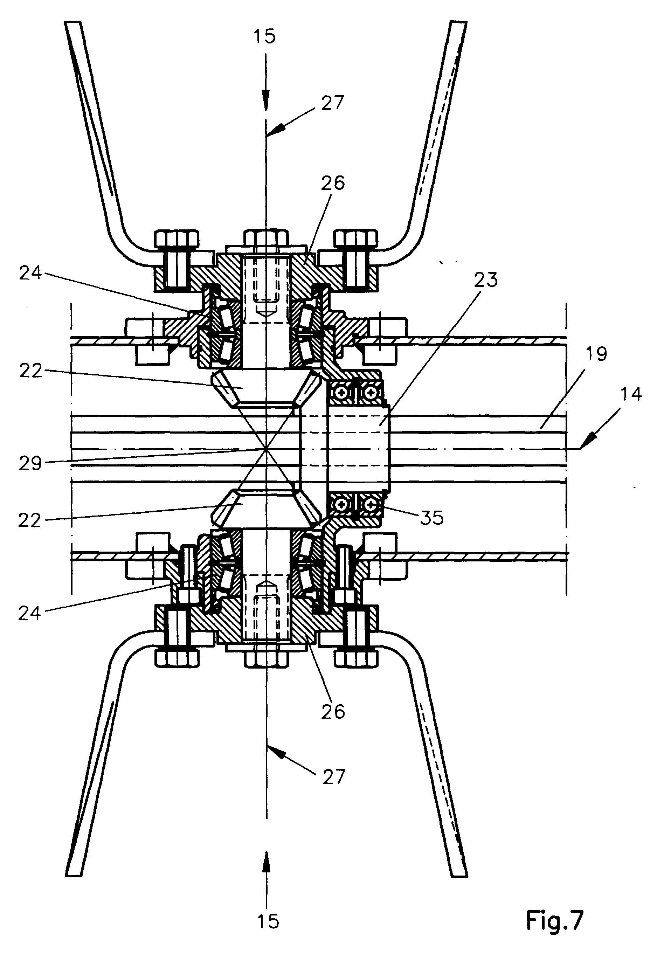

Fig. 7 zeigt den Schnitt C-C gemäß Fig. 5 in vergrößerter Darstellung. Die Zinkenkreiselachsen (27) und die Rotorwellenachse (28) bilden den Schnittpunkt (29). Die den Zinkenkreiseln (15) zugeordneten Kegelradritzel (22) greifen mit ihrer Verzahnung in die Verzahnung des ihnen zugeordneten feststehenden Tellerrades (23) ein. Das Tellerrad (23) ist in seiner Lage auf der Sechskantachse (19) fixiert und ist mittels der Wälzlager (35) an der Rotorwelle (14) abgestützt. Bedingt durch die Drehbewegung der Rotorwelle (14), ausgeführt als Hohlprofil (20), wälzen sich die Kegelradritzel (22) mit ihrer Verzahnung an den feststehenden Tellerrädern (23) ab, so daß die Zinkenkreisel (15) eine Drehbewegung um ihre Zinkenkreiselachse (27) ausführen.

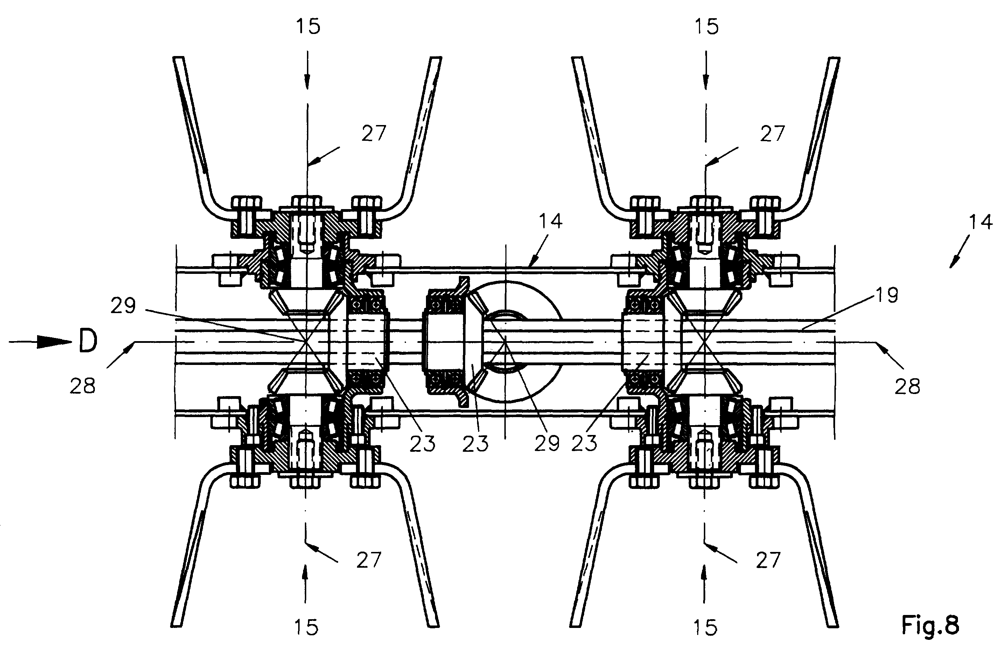

Fig. 8 zeigt Einzelheit (Y) als Längsschnitt gemäß Fig. 2 in vergrößerter Darstellung durch einen Teil der Rotorwelle (14) mit zwei benachbarten Zinkenkreiseln (15), deren Zinkenkreiselachsen (17) eine gemeinsame Ebene definieren. Mittig zwischen den beiden benachbarten Zinkenkreiseln der selben Ebene befindet sich ein weiteres Zinkenkreiselpaar (15'), dessen Zinkenkreiselachse (27') lotrecht zu der von den benachbarten Zinkenkreiselpaaren (15) definierten Ebene ausgerichtet ist. Bedingt durch die Art der Anordnung der Tellerräder (23, 23') drehen sich die jeweils benachbarten Zinkenkreiselpaare der selben Ebene gegenläufig zueinander.

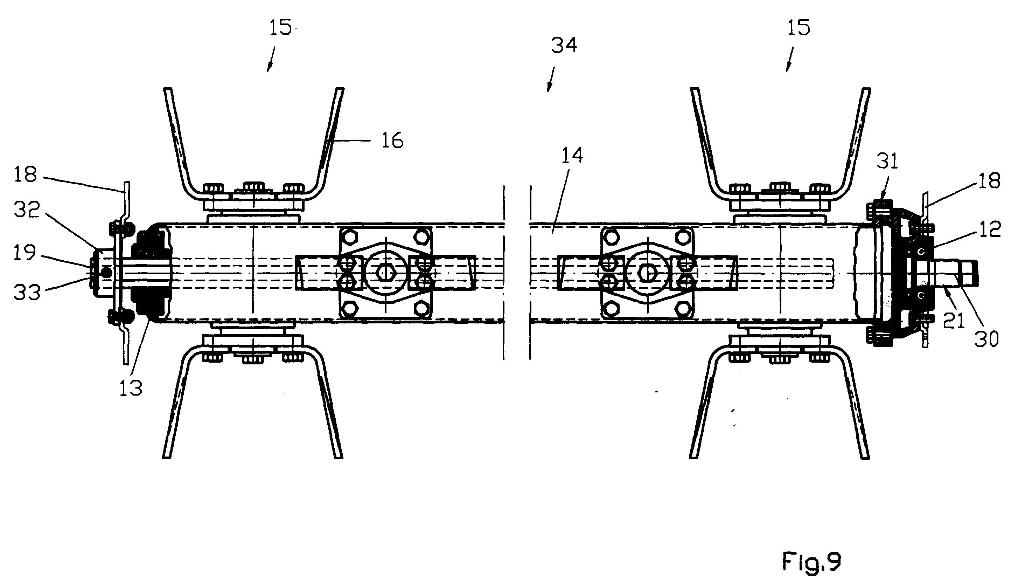

Fig. 9 zeigt den Kreiselrotor (34) mit beidseitigen Lagerungen, im wesentlichen bestehend aus der Rotorwelle (14), den Zinkenkreiseln (15), der feststehenden Sechskantachse (19), dem Antriebszapfen (30), dem Durchtriebslager (12), wobei die Rotorwelle (14) mittels einer Flanschverbindung (31) mit dem Antriebszapfen (30) verbunden ist und der Antriebszapfen (30) in dem Durchtriebslager (12) gelagert ist. Der Antriebszapfen (30) besitzt ein Vielkeilprofil (21) zur Übertragung des Antriebsdrehmomentes, welches beispielsweise von einem Rollenkettengetriebe (11) auf den Kreiselrotor (34) übertragen wird.

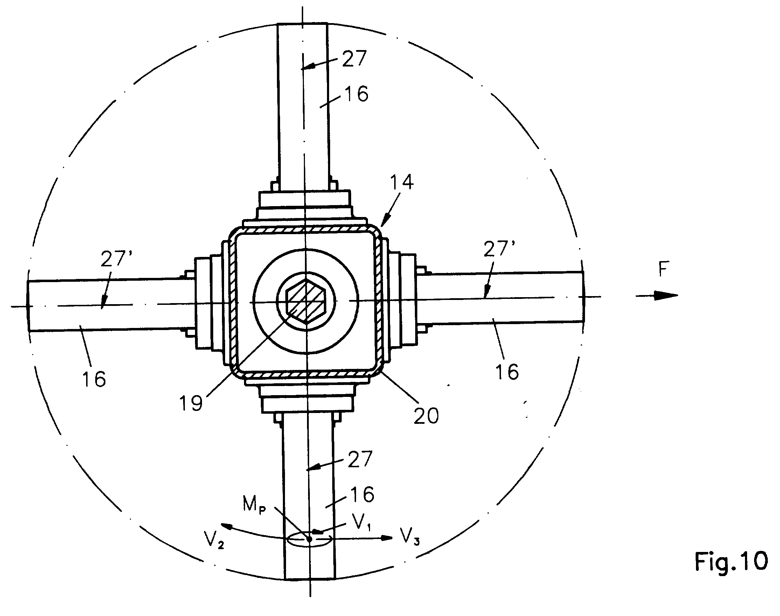

Fig. 10 zeigt die Ansicht D gemäß Fig. 8 mit den Zinkenkreiseln (15,15') in der Seitenansicht und damit die Anordnung der Zinkenkreisel (15,15') auf dem Umfang der Rotorwelle (14). Jeder Massenpunkt (M_{P}) eines Bodenbearbeitungszinkens (16) erfährt in seinem Betriebszustand während seines Eingriffs in den Boden gleichzeitig drei Bewegungsgrößen, zum einen die Rotationsbewegung (V₁) um die Zinkenkreiselachse (27), zum anderen die Rotationsbewegung (V₂) um die

## Patentansprüche

1. Bodenbearbeitungsmaschine mit einem Tragwerk zur Ankopplung an den Dreipunkt-Kraftheber eines Traktors (2), mit einem portalartig ausgebildeten Maschinenrahmen, dessen Seitenteile (18) durch einen Querträger (17) miteinander verbunden sind, mit einem angetriebenen horizontal und quer zur Fahrtrichtung sich erstreckenden Rotationskörper, welcher in den Seitenteilen (18) gelagert und mit Bodenbearbeitungswerkzeugen besetzt ist und dessen Rotationskörper von der Zapfwelle eines Traktors (2) antreibbar ist, **dadurch gekennzeichnet,** daß der Rotationskörper mit auf diesem dreh- und antreibbar gelagerten Bodenbearbeitungswerkzeugen besetzt ist.

2. Bodenbearbeitungsmaschine nach Anspruch 1, **dadurch gekennzeichnet,** daß die Bodenbearbeitungswerkzeuge einen Zinkenkreisel (15) bilden.

3. Bodenbearbeitungsmaschine nach Anspruch 1 und 2, **dadurch gekennzeichnet,** daß die Zinkenkreiselachse (27) der Zinkenkreisel (15) überwiegend radial zur Rotorwellenachse (28) des Kreiselrotors (34) ausgerichtet ist.

4. Bodenbearbeitungsmaschine nach Anspruch 1 bis 3, **dadurch gekennzeichnet,** daß jeweils zwei Zinkenkreisel (15) diametral einander gegenüberliegend auf der Rotorwelle (14) angeordnet sind.

5. Bodenbearbeitungsmaschine nach den Ansprüchen 1 bis 4, **dadurch gekennzeichnet,** daß die Zinkenkreisel (15) von einem Kegelradgetriebe, bestehend aus einem Kegelradritzel (22) und einem Tellerrad (23), welche miteinander in Eingriff stehen, angetrieben sind, wobei das Tellerrad (23) des Kegelradgetriebes innerhalb des Kreiselrotors (34) nicht rotierend festgesetzt ist.

6. Bodenbearbeitungsmaschine nach einem der Ansprüche 1 bis 5, **dadurch gekennzeichnet,** daß die Zinkenkreisel (15) untereinander gleiche oder verschiedene Eigendrehrichtungen aufweisen.

7. Bodenbearbeitungsmaschine nach einem der Ansprüche 1 bis 6, **dadurch gekennzeichnet**, daß diametral gegenüberliegende Zinkenkreisel (15) jeweils gegenläufig antreibbar sind.

8. Bodenbearbeitungsmaschine nach einem der Ansprüche 1 bis 7, **dadurch gekennzeichnet,** daß die räumliche Anordnung und Verteilung der Zinkenkreisel (15) zum einen auf dem Umfang des Kreiselrotors (34) und zum anderen in axialer Ausdehnung der Rotorwelle (14) so beschaffen ist, daß die Arbeitsbereiche der Zinken (16) sich teilweise überdecken.

9. Bodenbearbeitungsmaschine nach einem der Ansprüche 1 bis 8, **dadurch gekennzeichnet,** daß die axial benachbarten Reihen angehörenden Zinkenkreisel (15) jeweils in ihrer Grundausrichtung um etwa 90° versetzt auf dem Umfang des Kreiselrotor (9) angeordnet sind.

10. Bodenbearbeitungsmaschine nach einem der Ansprüche 1 bis 9, **dadurch gekennzeichnet,** daß die auf dem Kreiselrotor (9) axial nebeneinander angeordneten Zinkenkreisel (15) jeweils gegenläufig antreibbar sind.

11. Bodenbearbeitungsmaschine nach einem der Ansprüche 1 bis 10, **dadurch gekennzeichnet**, daß die Arbeitswerkzeuge der Zinkenkreisel (15) als auswechselbare Zinken (16) ausgebildet sind, die mittels einer lösbaren Verbindung mit einem Kreiselachsenflansch (26) drehfest verbunden sind.
